# FASCICULE DE BREVET EUROPEEN

(11) **EP 4 150 247 B1**
(45) Date de publication et mention de la délivrance du brevet: **16.07.2025**
(21) Numéro de dépôt: 21725172.7
(22) Date de dépôt: 11.05.2021
(51) Int. Cl.: F21S 43/239, F21S 43/245, F21S 43/249, F21S 43/14, F21S 43/31, F21V 8/00, B60Q 1/26

(54) **MODULE LUMINEUX POUR L'ÉCLAIRAGE ET/OU LA SIGNALISATION D'UN VÉHICULE AUTOMOBILE COMPRENANT UN GUIDE DE LUMIÈRE VRILLÉ APTE À AFFICHER UN MOTIF LUMINEUX**
LEUCHTMODUL ZUR BELEUCHTUNG UND/ODER SIGNALISIERUNG FÜR EIN KRAFTFAHRZEUG MIT EINEM VERDRILLTEN LICHTLEITER ZUR ANZEIGE EINES LICHTMUSTERS
LIGHT MODULE FOR LIGHTING AND/OR SIGNALLING FOR A MOTOR VEHICLE COMPRISING A TWISTED LIGHT GUIDE SUITABLE FOR DISPLAYING A LIGHT PATTERN

(30) Priorité: 15.05.2020 FR 2004871
(43) Date de publication de la demande: 22.03.2023
(73) Titulaire: Marelli Automotive Lighting France, 89330 Saint-Julien-du-Sault (FR)
(72) Inventeur: LAFFETA, Christophe, 78190 TRAPPES (FR); BUISSON, Alain, décédé (FR)
(74) Mandataire: Jacobacci Coralis Harle
(86) Numéro de dépôt international: PCT/EP2021/062494
(87) Numéro de publication internationale: WO 2021/228862

(56) Documents cités:
- WO-A1-2019/158889
- CN-A- 108 506 889
- CN-U- 209 856 982
- DE-A1- 102013 105 261
- DE-U1- 202019 003 710
- JP-A- 2015 149 159
- JP-A- 2015 162 363
- JP-A- 2017 027 662
- JP-A- 2020 009 656
- US-A1- 2012 250 341
- US-A1- 2016 091 653
- US-A1- 2019 210 514

## Description

### Domaine technique auquel se rapporte l'invention

La présente invention concerne le domaine technique des modules lumineux pour l'éclairage et/ou la signalisation des véhicules automobiles. La présente invention concerne plus particulièrement un module lumineux destiné à être monté dans un bloc optique pour véhicule automobile.

### Arrière-plan technologique

Les documents DE 10 2013 105261 A1, JP 2015 162363 A et CN 209 856 982 U sont représentatifs de l'art antérieur.

Pour des raisons de sécurité, la réglementation impose que chaque véhicule automobile soit équipé de modules lumineux d'éclairage et de signalisation, de manière à permettre aux usagers de la route d'identifier aisément la position ainsi que les intentions des véhicules automobiles.

De façon connue, un module lumineux se compose d'une source lumineuse éclairant une optique adaptée, pour projeter un faisceau lumineux conforme à la réglementation en vigueur.

Selon la fonction du module lumineux, la réglementation impose que le faisceau lumineux émis respecte les caractéristiques spécifiques suivantes : une couleur appropriée, une intensité lumineuse adaptée et un angle d'ouverture suffisant.

La valeur de l'angle d'ouverture, imposée par la réglementation, est de l'ordre de 120°. Afin de respecter cette valeur, il est connu l'emploi de lentilles optiques et/ou de réflecteurs optiques pour accroître l'angle d'ouverture du faisceau lumineux émis par la source lumineuse.

L'emploi de lentilles optiques et/ou de réflecteurs optiques, présente l'inconvénient d'accroître de façon significative l'encombrement du module lumineux. De ce fait, les blocs optiques intégrant plusieurs modules lumineux sont de dimensions imposantes, ce qui limite les possibilités d'agencement des blocs optiques sur les carrosseries des véhicules automobiles. Or, l'agencement d'un bloc optique sur un véhicule automobile est aujourd'hui un critère de différenciation important entre les véhicules.

Selon un autre inconvénient, les différentes pièces composant les modules lumineux accroissent de façon significative le poids du bloc optique. Or, la réduction du poids des véhicules automobiles est un objectif constant pour les constructeurs, afin de proposer des véhicules automobiles plus sobres en consommation d'énergie.

La présente invention vise à résoudre les problèmes techniques mentionnés ci-dessus, en proposant un module lumineux pour l'éclairage et/ou la signalisation d'un véhicule automobile, apte à afficher un motif lumineux, plus léger et moins encombrant par rapport à l'état de la technique, tout en respectant les obligations réglementaires.

### Objet de l'invention

Pour cela, l'invention propose un module lumineux, telle que définie dans la revendication 1, pour l'éclairage et/ou la signalisation d'un véhicule automobile, comprenant un premier guide de lumière s'étendant entre une extrémité proximale et une extrémité distale. Le premier guide de lumière est délimité par deux grandes faces parallèles ou sensiblement parallèles entre elles. Une première source lumineuse est agencée en vis de l'extrémité proximale du premier guide de lumière, de manière à permettre la propagation d'un faisceau lumineux entre les grandes faces et le long d'une direction de propagation parallèle ou sensiblement parallèle aux grandes faces. Le premier guide de lumière comprend des éléments diffusants aptes à dévier la lumière se propageant dans le guide de lumière, en direction des grandes faces.

L'invention est remarquable en ce que le long de la direction de propagation, les éléments diffusants forment un motif lumineux lorsque la première source lumineuse éclaire le premier guide de lumière, et les grandes faces du premier guide de lumière sont vrillées le long de la direction de propagation.

En d'autres termes, les grandes faces du guide de lumière exécutent un mouvement giratoire sur elle même, le long de la direction de propagation du faisceau lumineux émis par la première source lumineuse. Autrement dit, le long de la direction de propagation du faisceau lumineux, le guide de lumière a une forme semblable à une hélice.

De façon avantageuse, la forme originale du guide de lumière permet de modifier, le long de la direction de propagation du faisceau lumineux, l'orientation d'un vecteur normal à une grande face du guide de lumière. Cette caractéristique permet d'accroître de manière significative l'angle d'ouverture d'un faisceau lumineux émis à travers l'ensemble de la surface d'une grande face du guide de lumière.

La présence des éléments diffusants dans le guide de lumière permet également d'accroître la valeur de l'angle d'ouverture d'un faisceau émis à travers une grande face du guide de lumière, de manière à respecter les obligations réglementaires, sans recourir à l'emploi d'une lentille optique ou d'un réflecteur optique.

De façon avantageuse, les éléments diffusants sont agencés dans le premier guide de lumière de sorte à former un motif lumineux lorsqu'ils sont éclairés par la première source lumineuse.

Ainsi, l'invention propose un module lumineux pour l'éclairage et/ou la signalisation d'un véhicule automobile, apte à afficher un motif lumineux, plus léger et moins encombrant par rapport à l'état de la technique, tout en respectant les obligations réglementaires. De façon avantageuse, le module lumineux selon l'invention permet l'affichage d'un motif lumineux visible dans un champ d'observation plus large angulairement, notamment dans un champ d'observation perpendiculaire ou sensiblement perpendiculaire à la direction de propagation mentionnée ci-dessus.

Les éléments diffusants peuvent former des motifs géométriques simples ou complexes, comme des symboles, des lettres et/ou des chiffres. De préférence, les éléments diffusants forment un ou plusieurs motifs, s'étendant le long de la direction de propagation mentionnée ci-dessus.

À titre d'exemple, les éléments diffusants peuvent être agencés dans le premier guide de lumière de manière à former des motifs lumineux, reproduisant l'apparence de fibres optiques diffusant de la lumière.

Selon un mode de réalisation particulier de l'invention, lorsque la première source lumineuse éclaire le premier guide de lumière, les éléments diffusants forment au moins deux lignes lumineuses. De préférence, les lignes lumineuses sont parallèles ou sensiblement parallèles à la direction de propagation mentionnée ci-dessus. Pour permettre une observation aisée des lignes lumineuses, de préférence, les éléments diffusants forment des lignes dont la largeur est comprise entre 1 mm et 10 mm, de préférence entre 2 mm et 5 mm.

Selon un mode de réalisation préféré de l'invention, lorsque la première source lumineuse éclaire le premier guide de lumière, les éléments diffusants forment au moins deux lignes lumineuses écartées d'une distance comprise entre 2 mm et 20 mm, de préférence entre 5 mm et 10 mm.

Selon un autre mode de réalisation de l'invention, dans un plan normal à la direction de propagation dans le guide de lumière, du faisceau lumineux émis par la première source de lumière, l'extrémité proximale du guide de lumière s'étend le long d'une première direction d'allongement et l'extrémité distale du guide de lumière s'étend le long d'une seconde direction d'allongement, et la première direction d'allongement forme avec la seconde direction d'allongement un angle de torsion, dont la valeur est comprise entre 10° et 60°, de préférence entre 40° et 50°. De préférence, le long de la direction de propagation du faisceau lumineux dans le guide de lumière, la torsion des grandes faces est régulière.

Selon un autre mode de réalisation de l'invention, la distance séparant l'extrémité proximale de l'extrémité distale du premier guide de lumière, est comprise entre 60 mm et 120 mm, de préférence entre 70 mm et 80 mm.

Selon un autre mode de réalisation de l'invention, le module lumineux comprend une seconde source lumineuse, agencée en vis de l'extrémité distale du premier guide de lumière, apte à éclairer au moins partiellement le motif formé par les éléments diffusants.

Selon l'invention, le module lumineux comprend un second guide de lumière, s'étendant entre une extrémité proximale et une extrémité distale, le second guide de lumière étant délimité par deux grandes faces parallèles ou sensiblement parallèles entre elles, une troisième source lumineuse étant agencée en vis de l'extrémité proximale du second guide de lumière, de manière à permettre la propagation d'un faisceau lumineux entre les grandes faces et le long d'une direction de propagation parallèle ou sensiblement parallèle aux grandes faces, le second guide de lumière comprenant des éléments diffusants, aptes à dévier la lumière se propageant dans le guide de lumière en direction des grandes faces, caractérisé en ce qu'une grande face avant du second guide de lumière fait face à une grande face arrière du premier guide de lumière. De préférence, les deux grandes faces du second guide de lumière sont parallèles ou sensiblement parallèles aux grandes faces du premier guide de lumière.

Selon un autre mode de réalisation de l'invention, le module lumineux comprend une quatrième source lumineuse, agencée en vis de l'extrémité distale du second guide de lumière, de manière à permettre la propagation d'un faisceau lumineux dans le second guide de lumière.

Selon la première variante de l'invention, les éléments diffusants sont agencés dans le second guide de lumière, de manière à former un fond lumineux homogène ou sensiblement homogène au premier guide de lumière, lorsque les éléments diffusants sont éclairés par la troisième source lumineuse et/ou la quatrième source lumineuse.

Autrement dit, les éléments diffusants sont agencés dans le second guide de lumière, de sorte à permettre la diffusion d'un fond lumineux visible à travers le premier guide de lumière. Ainsi, de façon avantageuse, le second guide de lumière peut être employé comme le premier guide de lumière, pour émettre un signal lumineux pour éclairer et/ou signaler un véhicule automobile.

Selon la seconde variante de l'invention, le module lumineux comprend un réflecteur optique agencé en vis-à-vis d'une grande face arrière du second guide de lumière. De préférence, le réflecteur optique est parallèle ou sensiblement parallèle à la grande face arrière du guide de lumière. Le réflecteur peut être de couleur claire et/ou sa surface grainée.

Selon un autre mode de réalisation de l'invention, les sources lumineuses sont aptes à émettre un faisceau lumineux de couleur ambre, rouge ou blanche.

Selon un autre mode de réalisation de l'invention, le premier guide de lumière est apte à émettre un signal lumineux indiquant la présence d'un véhicule automobile à un observateur, et le second guide de lumière est apte à émettre un signal lumineux indiquant le freinage et/ou le recul et/ou le changement direction d'un véhicule automobile à un observateur.

En d'autres termes, le premier guide de lumière peut être employé comme lanterne d'un véhicule automobile, et le second guide de lumière peut être employé comme feu de recul, feu de stop et/ou feu de clignotant, émettant un faisceau lumineux passant à travers le premier guide de lumière.

Selon un autre mode de réalisation de l'invention, la plus petite distance séparant deux grandes faces d'un guide de lumière est comprise entre 2 mm et 5 mm, de préférence entre 3 mm et 4 mm.

Selon un autre mode de réalisation de l'invention, au moins une source lumineuse comprend plusieurs diodes électroluminescentes agencées le long d'une extrémité d'un guide de lumière. Selon un mode de réalisation préféré, au moins deux diodes électroluminescentes sont aptes à émettre des faisceaux lumineux de couleurs différentes.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également, un bloc optique pour véhicule automobile, comprenant au moins un module lumineux tel que décrit ci-dessus.

De préférence, le module lumineux est agencé dans le bloc optique de sorte que la direction de propagation dans le premier guide de lumière, du faisceau lumineux émis par la première source lumineuse, soit perpendiculaire ou sensiblement perpendiculaire à la chaussée, lorsque le bloc optique est monté sur un véhicule automobile, et une grande face avant d'au moins un module lumineux soit visible depuis l'extérieur du bloc optique.

Le bloc optique peut être monté à l'avant ou bien à l'arrière d'un véhicule automobile, pour éclairer et/ou signaler la présence du véhicule automobile aux autres utilisateurs de la route.

Selon un autre mode de réalisation de l'invention, le bloc optique comprend au moins deux modules lumineux décrits ci-dessus, aptes à émettre alternativement de la lumière à travers leurs grandes faces avant.

De préférence, le bloc optique comprend au moins deux modules lumineux dont les sources lumineuses sont solidaires d'une même platine.

Selon un autre mode de réalisation de l'invention, le bloc optique comprend au moins trois modules lumineux, agencés de manière à ce que leurs grandes faces avant soient visibles distinctement depuis l'extérieur du boîtier optique.

Selon un autre mode de réalisation de l'invention, le ou les modules lumineux présents dans le bloc optique éclairent une surface visible depuis l'extérieur du bloc optique, dont la surface est égale ou supérieure à 50 cm².

### Description des figures

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
[Fig. 1] illustre un vue schématique et en perspective d'un premier mode de réalisation d'un module lumineux n'ayant pas toutes les caractéristiques de l'invention;
[Fig. 2] illustre une vue schématique et en perspective d'un deuxième mode de réalisation d'un module lumineux selon l'invention ;
[Fig. 3] illustre une vue schématique et en perspective d'un troisième mode de réalisation d'un module lumineux selon l'invention ;
[Fig. 4] illustre une vue schématique et en perspective d'un quatrième mode de réalisation d'un module lumineux selon l'invention ;
[Fig. 5] illustre une vue schématique et en perspective d'un cinquième mode de réalisation d'un module lumineux selon l'invention ;
[Fig. 6] illustre une vue schématique d'un côté d'un bloc optique selon l'invention ;
[Fig. 7] illustre une vue schématique d'une coupe transversale du bloc optique représenté par la figure 6, à différentes hauteurs le long de la direction de propagation d'un faisceau lumineux dans les guides de lumière.

### Description détaillée de l'invention

Pour rappel, l'invention propose un module lumineux pour l'éclairage et/ou la signalisation d'un véhicule automobile, apte à afficher un motif lumineux, plus léger et moins encombrant par rapport à l'état de la technique, tout en respectant les obligations réglementaires.

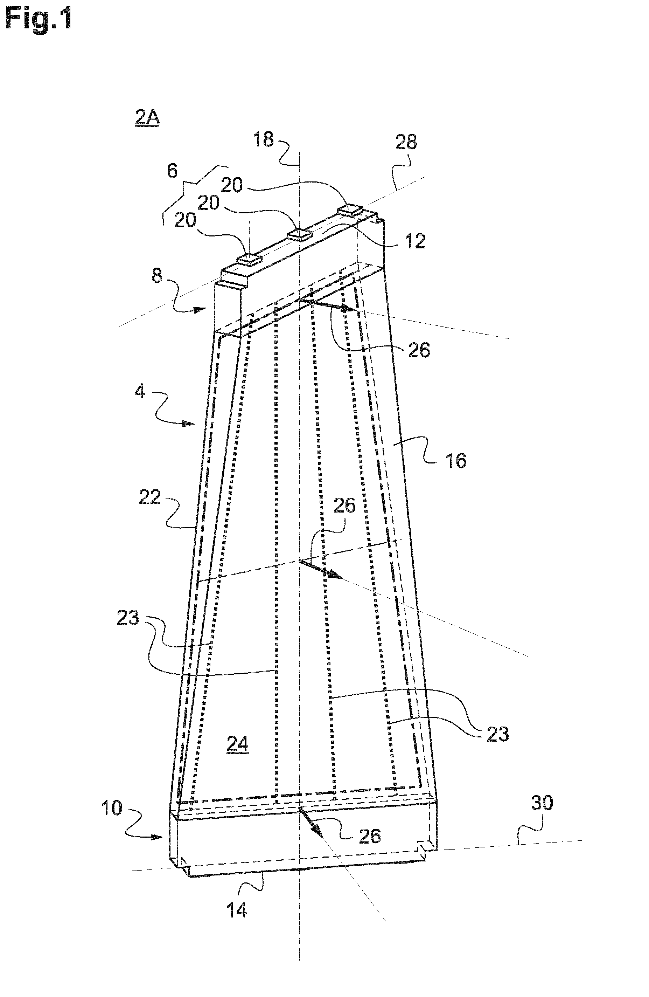

La figure 1 illustre un premier mode de réalisation non limitatif, d'un module lumineux 2A.

Le module lumineux 2A se compose d'un guide de lumière 4 éclairé par une première source lumineuse 6.

Le guide de lumière 4 s'étend entre une extrémité proximale 8 et une extrémité distale 10. L'extrémité proximale 8 du guide lumière est délimitée par une face proximale 12. La face proximale 12 est parallèle ou sensiblement parallèle à une face distale 14, délimitant l'extrémité distale 10 du guide de lumière. Les faces distale et proximale sont écartées d'une distance comprise entre 60 mm et 120 mm, de préférence entre 70 mm et 80 mm.

Les faces proximale et distale sont reliées par deux grandes faces 16 opposées, parallèles ou sensiblement parallèles entre elles. Les grandes faces 16 sont perpendiculaires ou sensiblement perpendiculaires à la face proximale 12. Les grandes faces 16 sont écartées d'une distance comprise entre 2 mm et 5 mm, de préférence entre 3 mm et 4 mm. La largeur des grandes faces 16, définie selon une direction parallèle ou sensiblement parallèle à la face proximale 12, est comprise entre 30 mm et 60 mm, de préférence entre 40 mm et 45 mm.

Le guide de lumière 4 est réalisé à partir d'un matériau transparent ou translucide à la lumière du jour, de préférence à partir de l'un des matériaux suivants : polycarbonate (PC) ou le polyméthacrylate de méthyle (PMMA).

La première source lumineuse 6 est agencée de manière à éclairer la face proximale 12 du guide de lumière, afin de permettre la propagation d'un faisceau lumineux entre les grandes faces 16, le long d'une direction de propagation 18 parallèle ou sensiblement parallèle aux grandes faces 16.

Selon le présent exemple, la première source lumineuse 6 comprend trois diodes électroluminescentes 20 distinctes, disposées le long de la face proximale 12 du premier guide de lumière. Les faisceaux lumineux émis par les diodes électroluminescentes 20 se propagent dans le premier guide de lumière 4 parallèlement ou sensiblement parallèlement à la direction de propagation 18.

Les diodes électroluminescentes 20 sont aptes à émettre des faisceaux lumineux de couleurs identiques ou bien de couleurs différentes, notamment des faisceaux lumineux de couleur blanche, ambre ou bien rouge, afin que le module lumineux 2A puisse respectivement être utilisé comme feu de recul, feu de clignotant ou feu de position et/ou freinage.

Les diodes électroluminescentes 20 sont alimentées électriquement par une unité de commande, non représentée sur la figure 1, apte à faire fonctionner de façon autonome chaque diode électroluminescente 20. L'unité de commande est notamment programmée pour faire fonctionner les diodes électroluminescentes de façon simultanée ou bien de façon alternative afin de créer des effets visuels dynamiques.

Le premier guide de lumière 4 inclut des éléments diffusants, permettant de dévier au moins une partie d'un faisceau lumineux se propageant dans le premier guide de lumière 4, en direction de ses grandes faces 16.

À titre d'exemple non limitatif, les éléments diffusants sont localisés au niveau d'une grande face arrière 22 du premier guide de lumière et forment des lignes 23 parallèles ou sensiblement parallèles à la direction de propagation 18. Les éléments diffusants sont configurés pour qu'une partie du faisceau lumineux émis par la première source lumineuse 6, passe à travers une grande face avant 24 du premier guide de lumière 4. L'angle d'ouverture du faisceau lumineux émis à travers la grande face avant 24 du guide de lumière, est compris entre 15° et 40°, de préférence de l'ordre de 30°.

Selon une variante de réalisation non représentée, les éléments diffusants sont agencés de manière à former une ligne devant chaque diode électroluminescente 20, de manière à ce que chaque ligne puisse être éclairée par une diode électroluminescente indépendamment des autres lignes. Ce mode de réalisation est particulièrement avantageux pour créer un effet d'animation de type "balayage".

Selon le présent exemple, les éléments diffusants se composent de cavités coniques, ouvertes sur la grande face arrière 22 du premier guide de lumière 4. Les sommets des cavités sont orientés en direction de la grande face avant 24. Le volume interne de chaque cavité est compris entre 48 000 µm³ et 536 000 µm³, de préférence de l'ordre de 95 000 µm³ et 268 000 µm³, de manière préférée de l'ordre de 218 000 µm³. Les cavités sont écartées, au niveau de la grande face arrière 22, d'une distance comprise entre 0,12 mm et 0,7 mm, de préférence entre 0,13 mm et 0,5 mm.

Comme mentionné ci-dessus, les éléments diffusants forment des lignes 23 visibles sur la figure 1, dont la largeur est comprise entre 1 mm et 10 mm, de préférence entre 2 mm et 5 mm. De préférence, deux lignes 23 sont écartées d'une distance comprise entre 2 mm et 20 mm, de préférence entre 5 mm et 10 mm.

Comme illustré par la figure 1, les grandes faces 16 du premier guide de lumière 4 sont vrillées, le long de la direction de propagation 18. En d'autres termes, les grandes faces 16 exécutent un mouvement giratoire sur elles-mêmes, le long de la direction de propagation 18.

Ce mouvement giratoire permet avantageusement de modifier l'orientation de la grande face avant 24 du premier guide de lumière 4. Sur la figure 1, l'orientation de la grande face avant 24 est représentée par un vecteur normal 26 à ladite grande face. On observe ainsi sur la figure 1 que l'orientation du vecteur normal 26 change le long de la direction de propagation 18.

De ce fait, l'orientation du faisceau lumineux émis à travers la grande face avant 24 du premier guide de lumière 4, pivote le long de la direction de propagation 18, de manière à ce que les lignes 23 lumineuses soient visibles plus largement dans un plan normal à la direction de propagation 18. Par les termes "plus largement", on entend le fait que les lignes lumineuses sont visibles selon un angle d'observation plus large, dans un plan perpendiculaire ou sensiblement perpendiculaire à la direction de propagation 18.

Autrement dit, le guide de lumière 4 est apte à pivoter le faisceau lumineux émis par le module lumineux 2A, le long de la direction de propagation 18, de manière à accroître l'angle de diffusion de la lumière émise par les lignes 23 le long du guide de lumière.

La visibilité des lignes 23 lumineuse est ainsi accrue, sans recourir pour cela à l'emploi d'un système mécanique encombrant et fragile.

De préférence, le mouvement giratoire des grandes faces 16 est régulier le long de la direction de propagation 18, de manière à ce que le premier guide de lumière 4 est une forme assimilable à une hélice.

Dans un plan normal à la direction de propagation 18, la face proximale 12 du premier guide de lumière s'étend le long d'une première direction d'allongement 28, et la face distale 14 du premier guide de lumière s'étend le long d'une seconde direction d'allongement 30. De préférence, la première direction d'allongement 28 forme avec la seconde direction d'allongement 30, un angle de torsion dont la valeur est comprise entre 10° et 60°, de préférence entre 40° et 50°.

Les éléments diffusants et l'angle de torsion des grandes faces 16, permettent ainsi au module lumineux 2A d'émettre un signal lumineux à travers la grande face avant 24 du premier guide de lumière 4, éclairant entre 80° et 130°, de préférence entre 110° et 130°, d'un paysage compris dans un plan normal à la direction de propagation 18. Ainsi, l'invention propose un module lumineux 2A plus simple de conception, moins encombrant et plus léger par rapport à l'état de la technique, pour émettre un motif lumineux visible plus largement.

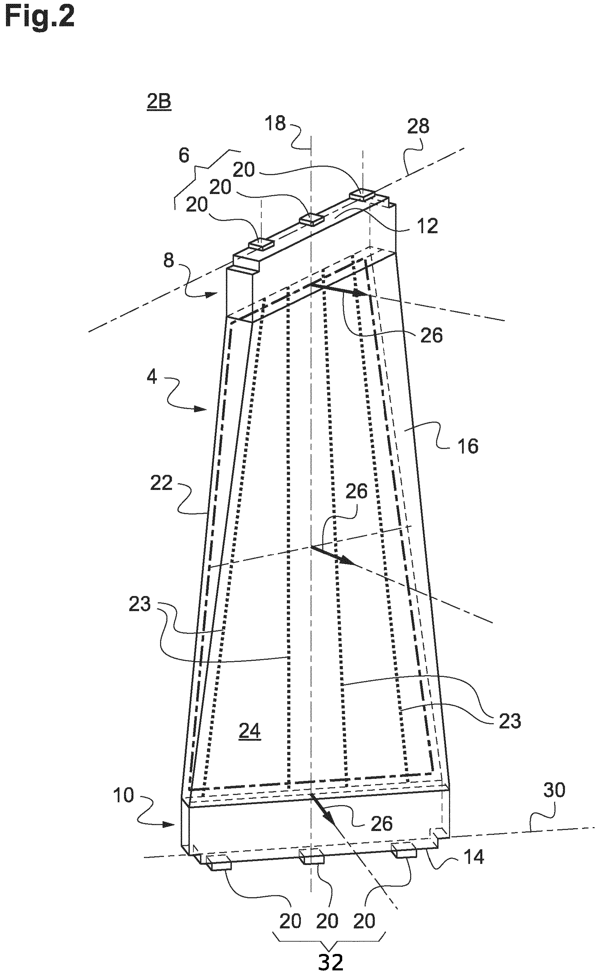

Une deuxième variante de réalisation d'un module lumineux 2B, qui elle est selon l'invention, est illustrée par la figure 2. Les éléments identiques ou similaires entre les différentes variantes de réalisation de l'invention décrites ci-après, sont désignés par les mêmes références sur les figures annexées.

Le module lumineux 2B se distingue du module lumineux 2A décrit ci-dessus, en ce qu'il comprend une seconde source lumineuse 32 éclairant la face distale 14 du premier guide de lumière 4. Selon le présent exemple, la seconde source lumineuse 32 est identique ou similaire à la première source lumineuse 6, elle se compose de trois diodes électroluminescentes 20 positionnées le long de la face distale 14 du premier guide de lumière 4. Ce mode de réalisation permet avantageusement d'éclairer de façon plus homogène la grande face avant 24 du premier guide de lumière.

Selon une variante de réalisation préférée, la première source lumineuse 6 et la seconde source lumineuse 32 émettent des faisceaux lumineux de couleurs différentes. À titre d'exemple non limitatif, la première source lumineuse 6 peut émettre un faisceau lumineux de couleur rouge ou ambre, et la seconde source lumineuse 32 peut émettre un faisceau lumineux de couleur blanche.

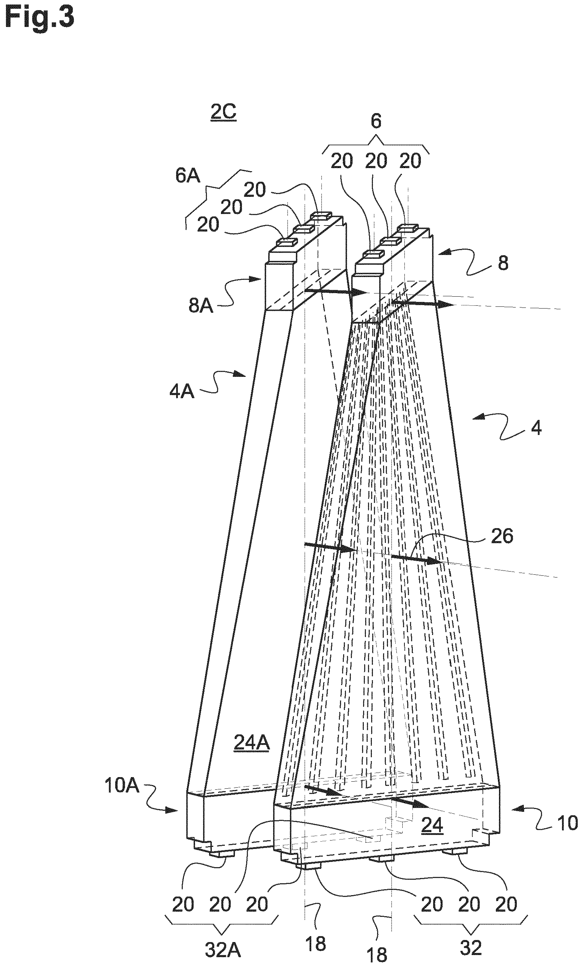

La figure 3 présente une troisième variante d'un module lumineux 2C selon l'invention. Le module lumineux 2C se distingue du module lumineux 2B décrit ci-dessus, en ce qu'il comprend un second guide de lumière 4A s'étendant entre une extrémité proximale 8A et une extrémité distale 10A. Le second guide de lumière 4A est délimité par deux grandes faces parallèles ou sensiblement parallèles entre elles. Une troisième source lumineuse 6A est agencée en vis de l'extrémité proximale 8A du second guide de lumière 4A, de manière à permettre la propagation d'un faisceau lumineux entre les grandes faces, le long d'une direction de propagation 18 parallèle ou sensiblement parallèle aux grandes faces. Le second guide de lumière 4A comprend des éléments diffusants non visibles sur les figures, aptes à dévier la lumière se propageant dans le guide de lumière 4A, en direction de ses grandes faces. Le second guide de lumière 4A est agencé en vis-à-vis du premier guide de lumière 4, de sorte qu'une grande face avant 24A du second guide de lumière 4A fasse face à une grande face arrière du premier guide de lumière 4.

Les grandes faces du premier guide de lumière et les grandes faces du second guide de lumière sont parallèles ou sensiblement parallèles entre elles. De préférence, la grande face avant 24A du second guide de lumière 4A et la grande face arrière du premier guide de lumière 4, sont distantes de manière à ne pas modifier les propriétés de diffusion des éléments diffusants présents sur la grande face arrière du premier guide de lumière 4. Selon le présent exemple, le premier guide de lumière 4 est écarté du second guide de lumière 4A d'une distance comprise entre 0,5 mm et 30 mm, de préférence entre 10 mm et 20 mm.

La troisième source lumineuse 6A est configurée pour éclairer l'ensemble des éléments diffusants présents au niveau de la grande face arrière du second guide de lumière 4A. Les éléments diffusants sont configurés et agencés pour former un fond lumineux au niveau de la grande face avant 24A du second guide de lumière. En d'autres termes, la troisième source lumineuse est apte à éclairer de façon homogène ou sensiblement homogène la grande face avant 24A du second guide de lumière, en vis-à-vis de la grande face arrière du premier guide de lumière 4.

De préférence, les éléments diffusants sont formés à partir de cavités identiques ou similaires aux cavités décrites ci-dessus.

Selon le présent exemple, l'extrémité distale 10A du second guide de lumière 4A est éclairée par une quatrième source lumineuse 32A identique ou similaire à la première source lumineuse 6.

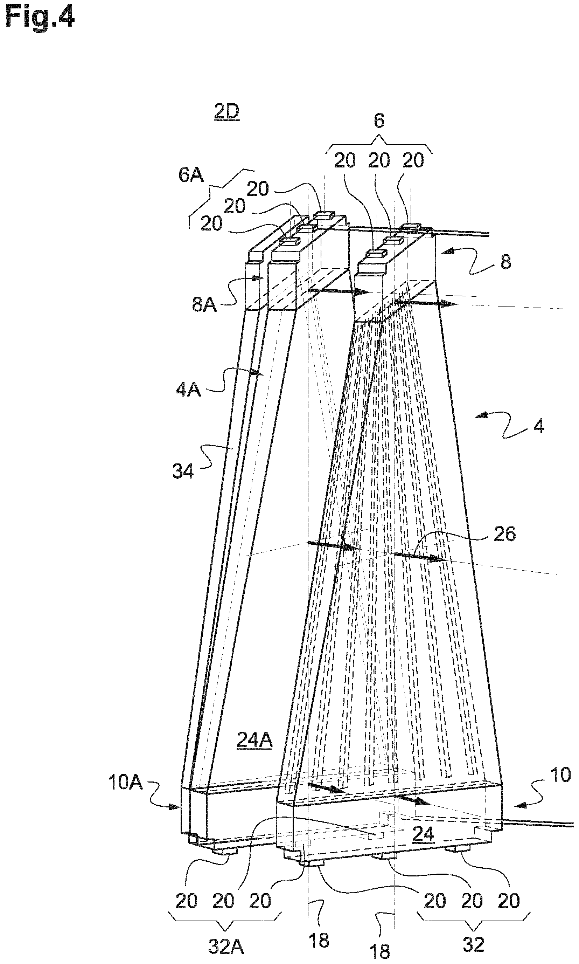

La figure 4 illustre un autre mode de réalisation d'un module lumineux 2D selon l'invention. Le module lumineux 2D se distingue du module lumineux 2C décrit ci-dessus, en ce qu'il comporte un réflecteur optique 34, agencé en vis-à-vis de la grande face arrière du second guide de lumière 4A. Le réflecteur optique 34 est parallèle ou sensiblement parallèle à la grande face arrière du second guide de lumière 4A. Le réflecteur optique 34 est de préférence de couleur claire et sa surface est grainée. Le réflecteur optique 34 est positionné à distance de la grande face arrière du second guide de lumière 4A, de manière à ne pas modifier les propriétés de diffusion des éléments diffusants. Selon le présent exemple, la plus petite distance entre le réflecteur optique 34 et la grande face arrière 22 du guide de lumière 4 est comprise entre 0,5 mm et 1 mm.

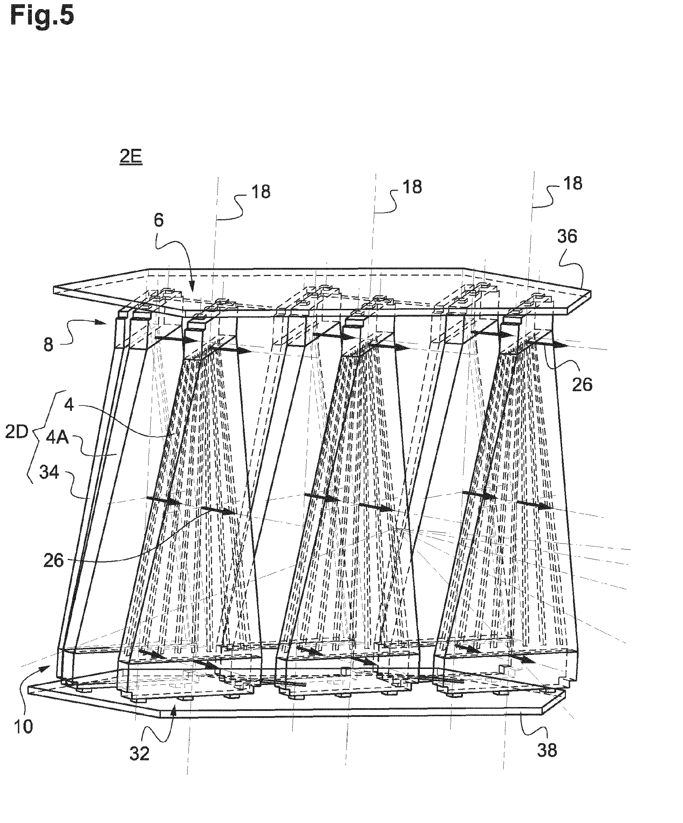

La figure 5 présente une cinquième variante d'un module lumineux 2E selon l'invention. Le module lumineux 2E se distingue du module lumineux 2D décrit ci-dessus, en ce qu'il comprend trois modules lumineux 2D disposés côte à côte. Les extrémités proximales 8 des modules lumineux 2D sont parallèles ou sensiblement parallèles entre elles. Les premières sources lumineuses 6 sont montées sur une même première platine 36. Les secondes sources lumineuses 32 sont montées sur une même seconde platine 38. La seconde platine 38 est parallèle ou sensiblement parallèle à la première platine 36. De préférence, les platines servent de support pour maintenir et relier électriquement un ensemble de composants électroniques entre eux, dans le but de réaliser un circuit électronique complexe. À titre d'exemple non limitatif, une platine peut servir de support pour l'unité de commande des sources lumineuses qui éclairent les guides de lumière.

Les grandes faces avant des premiers guides de lumière 4 sont disposées côtes à côtes, de sorte que lorsque les trois premiers guides de lumière 4 sont éclairés simultanément, le module lumineux 2E éclaire une surface continue ou sensiblement continue pour un observateur du module lumineux, dont la surface totale au niveau des grandes faces avant, est supérieure à 40 cm², de préférence égale ou supérieure à 50 cm².

Selon une variante de réalisation, les sources lumineuses sont pilotées par une unité de commande non représentée sur la figure 5, permettant d'éclairer chaque guide de lumière d'une couleur différente, simultanément ou bien alternativement, afin de créer une animation lumineuse.

De préférence, les première et seconde sources lumineuses sont configurées pour émettre une couleur rouge ou ambrée, et les troisième et quatrième sources lumineuses sont configurées pour émettre une couleur blanche et/ou rouge.

Selon une variante de réalisation non illustrée, le module lumineux peut comprendre au moins deux guides de lumière dont les angles de torsion sont de valeurs différentes.

Selon une variante de réalisation non illustrée, le module lumineux peut comprendre au moins deux guides de lumière de longueurs différentes.

Selon une variante de réalisation non illustrée, le module lumineux peut comprendre au moins deux guides de lumière dont les grandes faces avant sont orientées différemment.

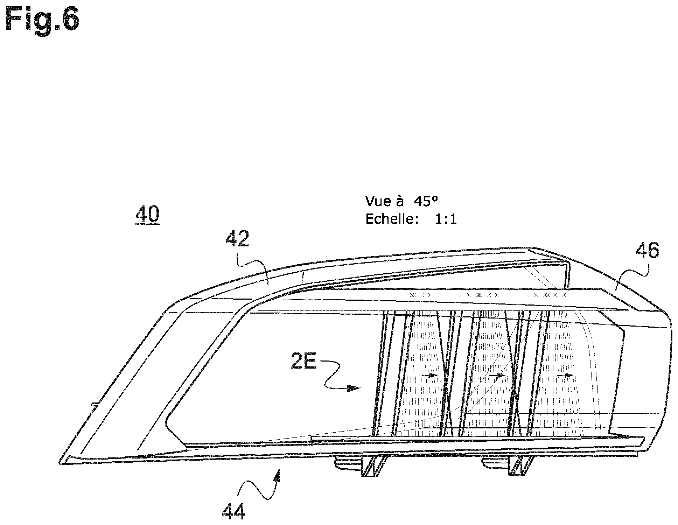

La figure 6 présente une vue de profil d'un bloc optique 40 pour un véhicule automobile. Selon le présent exemple, le bloc optique est destiné à être monté à l'avant d'un véhicule automobile. Le bloc optique 40 se compose d'un boîtier optique 42 délimité par une face inférieure 44. La face inférieure est destinée à être parallèle ou sensiblement parallèle à la chaussée, lorsque le bloc optique 40 est monté sur un véhicule automobile. Le bloc optique 40 comporte une ouverture obturée par une glace 46, protégeant de l'environnement extérieur les éléments présents dans le boîtier optique 40, tout en permettant leur observation depuis l'extérieur du bloc optique.

Selon l'invention, le boîtier optique 42 comprend un module lumineux 2E tel que décrit ci-dessus et représenté sur la figure 5. Le module lumineux 2E est agencé dans le boîtier optique de sorte que les grandes faces avant 24 des premiers guides de lumière soient orientées en direction de la glace 46, de manière à être visibles à travers la glace. Plus précisément, les premiers guides de lumière 4 sont positionnés dans le boîtier optique 42 de manière à ce que les directions de propagation 18 dans les guides de lumière, des faisceaux lumineux émis par les premières sources de lumière, soient perpendiculaires ou sensiblement perpendiculaires à la face inférieure 44 du boîtier optique 42.

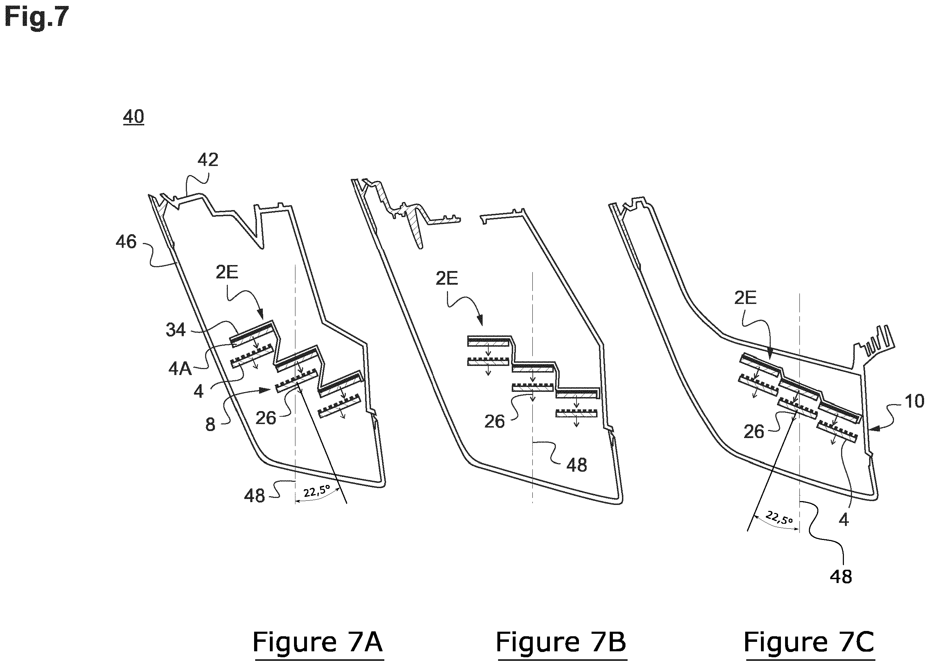

Des coupes transversales du bloc optique 40, à différentes hauteurs, sont illustrées sur les figures 7A à 7C. La hauteur des guides de lumière est définie selon une direction parallèle à la direction de propagation 18 des faisceaux lumineux, émis par les premières sources lumineuses, dans les guides de lumière.

Plus précisément, les figures 7A à 7C représentent respectivement une coupe transversale du bloc optique 40 à la hauteur de l'extrémité proximale 8 des guides de lumière, une coupe transversale du bloc optique 40 à mi-hauteur des guides de lumière et une coupe transversale du bloc optique 40 à la hauteur de l'extrémité distale 10 des guides de lumière. La référence 48 symbolise l'axe longitudinal d'un véhicule automobile, passant par l'avant et l'arrière du véhicule automobile, équipé du bloc optique 40.

Comme illustré par la figure 7A, le module lumineux 2D est positionné dans le bloc optique de sorte que les grandes faces avant 24 des premiers guides de lumière soient orientées en direction du centre de la chaussée, en formant avec la droite 48 un angle dont la valeur est de l'ordre de 22°5.

Comme illustré par la figure 7B, à mi-hauteur, les grandes faces avant 24 des guides de lumière sont perpendiculaires à la droite 48. En d'autres termes, à mi-hauteur, les grandes faces avant 24 des premiers guides de lumière font face à la route.

Comme illustré par la figure 7C, au niveau de leurs extrémités distales 10, les premiers guides de lumière sont orientés de manière à ce que leurs grandes faces avant forment un angle de - 22°5 avec la droite 48. Autrement dit, les extrémités distales des premiers guides de lumière 4 sont orientées en direction d'un bord de la route.

Le bloc optique 40 illustré par les figures 6 à 7C est ainsi apte à émettre un ou plusieurs motifs lumineux, sous la forme de lignes éclairées par exemple, de couleurs identiques ou différentes.

De façon avantageuse, les éléments diffusants sont agencés dans le second guide de lumière, de sorte à permettre la diffusion d'un fond lumineux visible à travers le premier guide de lumière. Ainsi, le second guide de lumière peut être employé comme le premier guide de lumière, pour émettre un signal lumineux pour éclairer et/ou signaler un véhicule automobile, conformément aux réglementations en vigueur, sans recourir pour cela à l'emploi d'une lentille optique ou d'un réflecteur optique encombrant.

De ce fait, le boîtier optique 42 est moins onéreux à produire et moins lourd par rapport à l'état de la technique.

Selon un autre avantage, les dimensions du bloc-optique peuvent être réduites afin de faciliter son intégration sur un véhicule automobile, compte tenu du fait du faible encombrement du module lumineux. Un bloc optique selon l'invention est ainsi plus compact par rapport à l'état de la technique.

## Revendications

1. Module lumineux (2A, 2B, 2C, 2D, 2E) pour l'éclairage et/ou la signalisation d'un véhicule automobile, comprenant :
- un premier guide de lumière (4) s'étendant entre une extrémité proximale (8) et une extrémité distale (10), le premier guide de lumière (4) étant délimité par deux grandes faces (16) parallèles ou sensiblement parallèles entre elles, une première source lumineuse (6) étant agencée en vis de l'extrémité proximale (8) du premier guide de lumière (4), de manière à permettre la propagation d'un faisceau lumineux entre les grandes faces (16) et le long d'une direction de propagation (18) parallèle ou sensiblement parallèle aux grandes faces (16), le premier guide de lumière (4) comprenant des éléments diffusants, aptes à dévier la lumière se propageant dans le guide de lumière (4) en direction des grandes faces (16), le long de la direction de propagation (18), les grandes faces (16) du premier guide de lumière (4) étant vrillées le long de la direction de propagation (18), et
- un second guide de lumière (4A) s'étendant entre une extrémité proximale (8A) et une extrémité distale (10A), le second guide de lumière (4A) étant délimité par deux grandes faces parallèles ou sensiblement parallèles entre elles, une troisième source lumineuse (6A) étant agencée en vis de l'extrémité proximale (8A) du second guide de lumière (4A), de manière à permettre la propagation d'un faisceau lumineux entre les grandes faces et le long d'une direction de propagation (18) parallèle ou sensiblement parallèle aux grandes faces, le second guide de lumière (4A) comprenant des éléments diffusants, aptes à dévier la lumière se propageant dans le second guide de lumière (4A) en direction des grandes faces, une grande face avant (24A) du second guide de lumière (4A) faisant face à une grande face arrière du premier guide de lumière (4),
**caractérisé en ce que :**
i) les éléments diffusants forment un motif lumineux (23) lorsque la première source lumineuse (6) éclaire le premier guide de lumière (4), et **en ce que** :
ii) les éléments diffusants du deuxième guide de lumière sont agencés dans le second guide de lumière (4A) de manière à former, lorsqu'ils sont éclairés, un fond lumineux homogène ou sensiblement homogène au premier guide de lumière (4) ; et/ou
iii) le module lumineux comprend un réflecteur optique (34) agencé en vis-à-vis d'une grande face arrière du second guide de lumière (4A).

2. Module lumineux (2A, 2B, 2C, 2D, 2E) selon la revendication 1, **caractérisé en ce que** lorsque la première source lumineuse (6) éclaire le premier guide de lumière (4), les éléments diffusants forment au moins deux lignes lumineuses (23).

3. Module lumineux (2A, 2B, 2C, 2D, 2E) selon la revendication 1 ou 2, **caractérisé en ce que** lorsque la première source lumineuse (6) éclaire le premier guide de lumière (4), les éléments diffusants forment au moins deux lignes lumineuses (23) écartées d'une distance comprise entre 2 mm et 20 mm, de préférence entre 5 mm et 10 mm.

4. Module lumineux (2A, 2B, 2C, 2D, 2E) selon l'une des revendications 1 à 3, **caractérisé en ce que** dans un plan normal à la direction de propagation (18), l'extrémité proximale (8) s'étend le long d'une première direction d'allongement (28) et l'extrémité distale (10) s'étend le long d'une seconde direction d'allongement (30), et **en ce que** la première direction d'allongement (28) forme avec la seconde direction d'allongement (30), un angle de torsion dont la valeur est comprise entre 10° et 60°, de préférence entre 40° et 50.

5. Module lumineux (2A, 2B, 2C, 2D, 2E) selon l'une des revendications 1 à 4, **caractérisé en ce que** la distance séparant l'extrémité proximale (8) de l'extrémité distale (10) du premier guide de lumière (4), est comprise entre 60 mm et 120 mm, de préférence entre 70 mm et 80 mm.

6. Module lumineux (2B, 2C, 2D) selon l'une des revendications 1 à 5, **caractérisé en ce qu'**il comprend une seconde source lumineuse (32), agencée en vis de l'extrémité distale (10) du premier guide de lumière (4), apte à éclairer au moins partiellement le motif (23) formé par les éléments diffusants.

7. Module lumineux (2C, 2D, 2E) selon l'une des revendications 1 à 6, **caractérisé en ce que** les deux grandes faces du second guide de lumière (4A) sont parallèles ou sensiblement parallèles aux grandes faces du premier guide de lumière (4).

8. Module lumineux (2C, 2D, 2E) selon selon l'une des revendications 1 à 7, **caractérisé en ce qu'**il comprend une quatrième source lumineuse (32A), agencée en vis de l'extrémité distale (10A) du second guide de lumière (4A), de manière à permettre la propagation d'un faisceau lumineux dans le second guide de lumière (4A).

9. Module lumineux selon l'une des revendications 1 à 8, **caractérisé en ce que** les sources lumineuses sont aptes à émettre un faisceau lumineux de couleur ambre, rouge ou blanche.

10. Module lumineux selon la revendication 9, **caractérisé en ce que** le premier guide de lumière (4) est apte à émettre un signal lumineux indiquant la présence du véhicule automobile à un observateur, et **en ce que** le second guide de lumière (4A) est apte à émettre un signal lumineux indiquant le freinage et/ou le recul et/ou le changement de direction d'un véhicule automobile à un observateur.

11. Bloc optique (40) pour véhicule automobile, **caractérisé en ce qu'**il comprend au moins un module lumineux (2A, 2B, 2C, 2D, 2E) selon l'une des revendications 1 à 10.

12. Bloc optique (40) selon la revendication 11, **caractérisé en ce que** le module lumineux (2A, 2B, 2C, 2D, 2E) est agencé dans le bloc optique (40) de sorte que la direction de propagation (18) dans le premier guide de lumière (4), du faisceau lumineux émis par la première source lumineuse (6), soit perpendiculaire ou sensiblement perpendiculaire à la chaussée lorsque le bloc optique (40) est monté sur un véhicule automobile, et **en ce qu'**une grande face avant (24) d'au moins un module lumineux (2A, 2B, 2C, 2D, 2E) soit visible depuis l'extérieur du bloc optique (40).

## Patentansprüche

1. Leuchtmodul (2A, 2B, 2C, 2D, 2E) zur Beleuchtung und/oder Signalisierung eines Kraftfahrzeugs mit:
- einem ersten Lichtleiter (4), der sich zwischen einem proximalen Ende (8) und einem distalen Ende (10) erstreckt, wobei der erste Lichtleiter (4) durch zwei zueinander parallele oder im Wesentlichen parallele große Seiten (16) begrenzt ist, wobei eine erste Lichtquelle (6) gegenüber dem proximalen Ende (8) des ersten Lichtleiters (4) angeordnet ist, um die Ausbreitung eines Lichtstrahls zwischen den beiden großen Seiten (16) und entlang einer zu den großen Seiten (16) parallelen oder im Wesentlichen parallelen Ausbreitungsrichtung (18) zu ermöglichen, wobei der erste Lichtleiter (4) Streuelemente aufweist, die geeignet sind, das sich im Lichtleiter (4) ausbreitende Licht in Richtung der großen Seiten (16) entlang der Ausbreitungsrichtung (18) abzulenken, wobei die großen Seiten (16) des ersten Lichtleiters (4) entlang der Ausbreitungsrichtung (18) verdrillt sind, und
- einem zweiten Lichtleiter (4A), der sich zwischen einem proximalen Ende (8A) und einem distalen Ende (10A) erstreckt, wobei der zweite Lichtleiter (4A) durch zwei zueinander parallele oder im Wesentlichen parallele große Seiten begrenzt ist, wobei eine dritte Lichtquelle (6A) gegenüber dem proximalen Ende (8A) des zweiten Lichtleiters (4A) angeordnet ist, um die Ausbreitung eines Lichtstrahls zwischen den beiden großen Seiten und entlang einer zu den großen Seiten parallelen oder im Wesentlichen parallelen Ausbreitungsrichtung (18) zu ermöglichen, wobei der zweite Lichtleiter (4A) Streuelemente aufweist, die geeignet sind, das sich im zweiten Lichtleiter (4A) ausbreitende Licht in Richtung der großen Seiten entlang der Ausbreitungsrichtung (18) abzulenken, wobei eine große Vorderseite (24A) des zweiten Lichtleiters (4A) einer großen Rückseite des ersten Lichtleiters (4) gegenüberliegt,
**dadurch gekennzeichnet, daß**
i) die Streuelemente ein Leuchtmuster (23) bilden, wenn die erste Lichtquelle (6) den ersten Lichtleiter (4) beleuchtet,
und daß
ii) die Streuelemente des zweiten Lichtleiters im zweiten Lichtleiter (4A) so angeordnet sind, daß sie, wenn sie beleuchtet sind, am ersten Lichtleiter (4) einen gleichmäßigen oder im Wesentlichen gleichmäßigen Leuchthintergrund bilden,
und/oder
iii) das Leuchtmodul einen optischen Reflektor (34) aufweist, der gegenüber einer großen Rückseite des zweiten Lichtleiters (4A) angeordnet ist.

2. Leuchtmodul (2A, 2B, 2C, 2D, 2E) gemäß Anspruch 1, **dadurch gekennzeichnet, daß**, wenn die erste Lichtquelle (6) den ersten Lichtleiter (4) beleuchtet, die Streuelemente mindestens zwei Leuchtlinien (23) bilden.

3. Leuchtmodul (2A, 2B, 2C, 2D, 2E) gemäß Anspruch 1 oder 2, **dadurch gekennzeichnet, daß**, wenn die erste Lichtquelle (6) den ersten Lichtleiter (4) beleuchtet, die Streuelemente mindestens zwei Leuchtlinien (23) bilden, die zueinander einen Abstand zwischen 2 mm und 20 mm, vorzugsweise zwischen 5 mm und 10 mm aufweisen.

4. Leuchtmodul (2A, 2B, 2C, 2D, 2E) gemäß einem der Ansprüche 1 bis 3, **dadurch gekennzeichnet, daß** sich in einer zur Ausbreitungsrichtung (18) senkrechten Ebene das proximale Ende (8) entlang einer ersten Erstreckungsrichtung (28) erstreckt und daß sich das distale Ende (10) entlang einer zweiten Erstreckungsrichtung (30) erstreckt, und daß die erste Erstreckungsrichtung (28) mit der zweiten Erstreckungsrichtung (30) einen Torsionswinkel bildet, dessen Wert zwischen 10 und 60°, vorzugsweise zwischen 40° und 50° beträgt.

5. Leuchtmodul (2A, 2B, 2C, 2D, 2E) gemäß einem der Ansprüche 1 bis 4, **dadurch gekennzeichnet, daß** der das proximale Ende (8) vom distalen Ende (10) des ersten Lichtleiters (4) trennende Abstand zwischen 60 mm und 120 mm, vorzugsweise zwischen 70 mm und 80 mm beträgt.

6. Leuchtmodul (2B, 2C, 2D) gemäß einem der Ansprüche 1 bis 5, **dadurch gekennzeichnet, daß** es eine gegenüber dem distalen Ende (10) des ersten Lichtleiters (4) angeordnete zweite Lichtquelle (32) aufweist, die geeignet ist, das von den Streuelementen gebildete Muster (23) mindestens teilweise zu beleuchten.

7. Leuchtmodul (2C, 2D, 2E) gemäß einem der Ansprüche 1 bis 6, **dadurch gekennzeichnet, daß** die beiden großen Seiten des zweiten Lichtleiters (4A) zu den beiden großen Seiten des ersten Lichtleiters (4) parallel oder im Wesentlichen parallel sind.

8. Leuchtmodul (2C, 2D, 2E) gemäß einem der Ansprüche 1 bis 7, **dadurch gekennzeichnet, daß** es eine gegenüber dem distalen Ende (10A) des zweiten Lichtleiters (4A) angeordnete vierte Lichtquelle (32A) aufweist, um die Ausbreitung eines Lichtstrahls im zweiten Lichtleiter (4A) zu ermöglichen.

9. Leuchtmodul gemäß einem der Ansprüche 1 bis 8, **dadurch gekennzeichnet, daß** die Lichtquellen geeignet sind, einen Lichtstahl gelber, roter oder weißer Farbe abzugeben.

10. Leuchtmodul gemäß Anspruch 9, **dadurch gekennzeichnet, daß** der erste Lichtleiter (4) geeignet ist, ein Lichtsignal abzugeben, das einem Beobachter das Vorhandensein des Kraftfahrzeugs anzeigt, und daß der der zweite Lichtleiter (4A) geeignet ist, ein Lichtsignal abzugeben, das einem Beobachter das Bremsen und/oder das Zurückfahren und/oder einen Richtungswechsel eines Kraftfahrzeugs anzeigt.

11. Optische Baugruppe (40) für ein Kraftfahrzeug, **dadurch gekennzeichnet, daß** sie mindestens ein Leuchtmodul (2A, 2B, 2C, 2D, 2E) gemäß einem der Ansprüche 1 bis 10 aufweist.

12. Optische Baugruppe (40) gemäß Anspruch 11, **dadurch gekennzeichnet, daß** das Leuchtmodul (2A, 2B, 2C, 2D, 2E) so in der optischen Baugruppe (40) angeordnet ist, daß die Ausbreitungsrichtung (18) des von der ersten Lichtquelle (6) ausgesandten Lichtstrahls im ersten Lichtleiter (4) senkrecht oder im Wesentlichen senkrecht zur Fahrbahn ist, wenn die optische Baugruppe (40) in einem Kraftfahrzeug installiert ist, und daß eine große Vorderseite (24) mindestens eines Leuchtmoduls (2A, 2B, 2C, 2D, 2E) von außerhalb der optischen Baugruppe (40) sichtbar ist.

## Claims

1. Light module (2A, 2B, 2C, 2D, 2E) for lighting and/or signaling for a motor vehicle, comprising:
- a first light guide (4) extending between a proximal end (8) and a distal end (10), the first light guide (4) being delimited by two big faces which are parallel or essentially parallel to each other, a first light source (6) being arranged in front of the proximal end (8) of the first light guide (4), so as to allow the propagation of a light beam between both big faces and in a direction of propagation (18) parallel or essentially parallel to the big faces (16), the first light guide (4) comprising scattering elements suitable for deviating the light that propagates inside the light guide (4) towards the big faces (16) along the direction of propagation (18), the big faces (16) of the light guide (4) being twisted along the direction of propagation (18), and
- a second light guide (4A) extending between a proximal end (8A) and a distal end (10A), the second light guide (4A) being delimited by two big faces which are parallel or essentially parallel to each other, a third light source (6A) being arranged in front of the proximal end (8A) of the second light guide (4A), so as to allow the propagation of a light beam between both big faces and in a direction of propagation (18) parallel or essentially parallel to the big faces (16), the second light guide (4A) comprising scattering elements suitable for deviating the light that propagates inside the second light guide (4A) towards the big faces, a big front face (24A) of the second light guide (4A) facing a big rear face of the first light guide (4),
**characterized in that**:
i) the scattering elements form a light pattern (23) when the first light source (6) lights the first light guide (4), and **in that**:
ii) the scattering elements of the second light guide are arranged in the second light guide (4A) so as to form, when they are lighted, a homogeneous or essentially homogeneous shimmering background for the first light guide (4);
and/or
iii) the light module comprises an optical reflector (34) arranged in front of a big rear face of the second light guide (4A).

2. Light module (2A, 2B, 2C, 2D, 2E) according to claim 1, **characterized in that**, when the first light source (6) lights the first light guide (4), the scattering elements form at least two light lines (23).

3. Light module (2A, 2B, 2C, 2D, 2E) according to claim 1 or 2, **characterized in that**, when the first light source (6) lights the first light guide (4), the scattering elements form at least two light lines (23) being spaced at a distance of between 2 mm and 20 mm, preferably between 5 mm and 10 mm.

4. Light module (2A, 2B, 2C, 2D, 2E) according to one of claims 1 to 3, **characterized in that**, in a plane perpendicular to the direction of propagation (18), the proximal end (8) extends along a first direction of extension (28) and the distal end (10) extends along a second direction of extension (30), and **in that** the first direction of extension (28) and the second direction of extension (30) form a twisting angle, the value of which is between 10° and 60°, preferably between 40° and 50°.

5. Light module (2A, 2B, 2C, 2D, 2E) according to one of claims 1 to 4, **characterized in that** the distance between the proximal end (8) and the distal end (10) of the first light guide (4) is between 60 mm and 120 mm, preferably between 70 mm and 80 mm.

6. Light module (2B, 2C, 2D) according to one of claims 1 to 5, **characterized in that** it comprises a second light source (32) arranged in front of the distal end (10) of the first light guide (4), suitable for lighting, at least partially, the pattern (23) formed by the scattering elements.

7. Light module (2C, 2D, 2E) according to one of claims 1 to 6, **characterized in that** both big faces of the second light guide (4A) are parallel or essentially parallel to the big faces of the first light guide (4).

8. Light module (2A, 2B, 2C, 2D, 2E) according to claim 1, **characterized in that** it comprises a fourth light source (32A) arranged in front of the distal end (10A) of the second light guide (4A), so as to allow the propagation of a light beam in the second light guide (4A).

9. Light module according to one of the claims 1 too 8, **characterized in that** the light sources are suitable for emitting a light beam having a yellow, red, or white color.

10. Light module according to claim 9, **characterized in that** the first light guide (4) is suitable for emitting a light signal indicating the presence of the motor vehicle to an observer, and **in that** the second light guide (4A) is suitable for emitting a light signal indicating breaking and/or rolling backwards and/or changing the direction of a motor vehicle to an observer.

11. Optical block (40) for a motor vehicle, **characterized in that** it comprises at least one light module (2A, 2B, 2C, 2D, 2E) according to one of claims 1 to 10.

12. Optical block (40) according to claim 11, **characterized in that** the light module (2A, 2B, 2C, 2D, 2E) is arranged in the optical block (40) so that the direction of propagation (18) of the light beam emitted by the first light source (6) inside the first light guide (4) is perpendicular or essentially perpendicular to the road when the optical block (40) is mounted on the motor vehicle, and **in that** a front big face (24) of at least one light module (2A, 2B, 2C, 2D, 2E) is visible from the outside of the optical block (40).
